(19) **Europäisches Patentamt**
**European Patent Office**
**Office européen des brevets**

(11) **EP 4 455 110 A1**

(12) **EUROPEAN PATENT APPLICATION**
published in accordance with Art. 153(4) EPC

(43) Date of publication:
**30.10.2024 Bulletin 2024/44**

(21) Application number: **22911170.3**

(22) Date of filing: **19.12.2022**

(51) International Patent Classification (IPC):
**C04B 35/80** (2006.01)

(52) Cooperative Patent Classification (CPC):
**C04B 35/80**

(86) International application number:
**PCT/JP2022/046653**

(87) International publication number:
**WO 2023/120468 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2021 JP 2021207536**

(71) Applicant: **Tosoh Corporation
Yamaguchi 746-8501 (JP)**

(72) Inventors:
• **OHTA, Ikuya
Ayase-shi Kanagawa 252-1123 (JP)**
• **NAWATA, Yushi
Ayase-shi Kanagawa 252-1123 (JP)**
• **HIRATAKA, Yo
Ayase-shi Kanagawa 252-1123 (JP)**
• **YAMASHITA, Isao
Ayase-shi Kanagawa 252-1123 (JP)**

(74) Representative: **Hoffmann Eitle
Patent- und Rechtsanwälte PartmbB
Arabellastraße 30
81925 München (DE)**

(54) **CERAMIC MATRIX COMPOSITE MATERIAL AND METHOD FOR MANUFACTURING SAME**

(57)     Provided is at least one of a ceramic matrix composite in which the decrease in strength after the heat resistance process is reduced, a method for manufacturing the same and a ceramic matrix that gives such a ceramic matrix composite.

A ceramic matrix composite comprising a ceramic matrix, continuous ceramic fibers and at least two sintering inhibitors.

**EP 4 455 110 A1**

**Description**

TECHNICAL FIELD

The present disclosure relates to a ceramic matrix composite and a method for manufacturing the same.

BACKGROUND ART

Ceramic matrix composites (hereinafter also referred to as "CMCs") in which continuous ceramic fibers and a ceramic matrix are integrated have higher resistance to crack propagation-induced fracture of the entire material than typical ceramics. Due to this feature, studies are being conducted on using CMCs as an alternative material for heat-resistant metals such as Ni-based alloys, and the CMCs are now highly anticipated to be used in jet engine parts of airplanes, for example.

In recent years, to further improve the heat resistance, CMCs having a matrix composed of an additive-containing ceramic matrix have been the subject of studies. For example, Non-Patent Document 1 discloses a CMC that contains, as ceramic fibers, continuous alumina fibers and, as a ceramic matrix, mullite doped with a small amount of alumina. Furthermore, Non-Patent Document 2 discloses a CMC that contains, as ceramic fibers, continuous fibers composed of alumina and mullite and, as a ceramic matrix, alumina doped with silica.

PRIOR ART DOCUMENTS

NON-PATENT DOCUMENTS

Non-patent document 1: J. AM. CERAM. SOC., 81[8], (1998) 2077-86.
Non-Patent Document 2: J. EURO. CERAM. SOC., 24 (2004) 565-578 DISCLOSURE OF INVENTION

TECHNICAL PROBLEM

According to the CMCs in Non-Patent Documents 1 and 2, ceramic crystal grains of the ceramic matrix prominently grow after a process (hereinafter also referred to as a "heat resistance process") that involves a high temperature and takes a long period of time. Thus, compared with the strength of the CMC before the heat resistance process, the strength of the CMC after the heat resistance process is significantly low.

An object of the present disclosure is to provide at least one of a ceramic matrix composite in which the decrease in strength after the heat resistance process is reduced, a method for manufacturing the same and a ceramic matrix that gives such a ceramic matrix composite. Another object of the present disclosure is to provide at least one of a ceramic matrix composite in which the decrease in strength after long hours of exposure to a high temperature of 1000°C or higher is reduced, a method for manufacturing the same and a ceramic matrix that gives such a ceramic matrix composite.

SOLUTION TO PROBLEM

The present disclosure has focused on the function of a sintering inhibitor in the CMC. Furthermore, it has been found that according to a CMC that contains multiple sintering inhibitors, the decrease in strength is significantly reduced even after the heat resistance process (for example, the process performed for 1000 hours at 1200°C in an air atmosphere; hereinafter may also be referred to as a "heat exposure process") due to the synergistic action of the matrix crystal growth inhibiting effect of the sintering inhibitor and effects other than this.

In other words, the present invention is as disclosed in the claims and the gist of the present disclosure is as follows.

[1] A ceramic matrix composite comprising a ceramic matrix, continuous ceramic fibers and at least two sintering inhibitors.

[2] The ceramic matrix composite described in [1] above, wherein the sintering inhibitors are at least two selected from the group consisting of silica, germania, zirconia, yttria, titania, hafnia, magnesia, scandia, lanthanum oxide, cerium oxide, praseodymium oxide, neodymium oxide, samarium oxide, europium oxide, gadolinium oxide, terbium oxide, erbium oxide, ytterbium oxide, lutetium oxide and mullite.

[3] The ceramic matrix composite described in [1] or [2] above, wherein at least silica is contained as the sintering inhibitors.

[4] The ceramic matrix composite described in any one of [1] to [3] above, wherein a mass ratio of the sintering inhibitors to the ceramic matrix is more than 0 and 6.0 or less.

[5] The ceramic matrix composite described in any one of [1] to [4] above, wherein an average inhibitor particle size is 0.20 $\mu$m or more and 0.90 $\mu$m or less.

[6] The ceramic matrix composite described in any one of [1] to [5] above, wherein an average centroid-centroid distance is 0.6 $\mu$m or more and 5.0 $\mu$m or less.

[7] The ceramic matrix composite described in any one of [1] to [6] above, wherein the ceramic matrix is at least one of alumina and mullite.

[8] The ceramic matrix composite described in any one of [1] to [7] above, wherein the continuous ceramic fibers contain an $\alpha$-alumina structure in a crystal structure and have an $Al_2O_3$ content of 60 mass% or more and 100 mass% or less.

[9] A method for manufacturing the ceramic matrix composite described in any one of [1] to [8] above, the method comprising: a step of obtaining a mixture by mixing continuous ceramic fibers and a slurry containing a ceramic matrix source and at least two sintering inhibitor sources, a step of obtaining a green body by solidifying the mixture and a step of firing the green body.

[10] The method described in [9] above, wherein the sintering inhibitor sources are compounds that contain at least one selected from the group consisting of silicon, aluminum, germanium, zirconium, yttrium, titanium, hafnium, magnesium, scandium and lanthanoid elements.

[11] A member comprising the ceramic matrix composite described in any one of [1] to [8] above.

ADVANTAGEOUS EFFECTS OF INVENTION

The present disclosure can achieve the object of providing at least one of a ceramic matrix composite in which the decrease in strength after the heat resistance process is reduced and a method for manufacturing the same. Furthermore, the present disclosure can provide at least one of a ceramic matrix composite in which the decrease in strength after long hours of exposure to a high temperature of 1000°C or higher is reduced, a method for manufacturing the same and a ceramic matrix that gives such a ceramic matrix composite.

BRIEF DESCRIPTION OF DRAWINGS

[Fig. 1] Fig. 1 is a schematic diagram of image processing in calculating the average inhibitor particle size.
[Fig. 2] Fig. 2 is a schematic diagram of image processing in calculating the average centroid-centroid distance.
[Fig. 3] Fig. 3 is a schematic diagram of a cross section of a CMC.

DESCRIPTION OF EMBODIMENTS

The ceramic matrix composite of the present disclosure will now be described through some examples of embodiments. The terms used in the embodiments are as follows.

The "ceramic matrix composite" (CMC) is a material composed of continuous ceramic fibers and a ceramic matrix, in particular, a material in which continuous ceramic fibers and a ceramic matrix are integrated, and is what is known as a ceramic fiber-reinforced ceramic.

The "ceramic matrix" is a base material (base phase or matrix) of the CMC and is mainly composed of ceramic crystal grains (hereinafter may also be simply referred to as "crystal grains"). In other words, the ceramic matrix is the part of the CMC other than the continuous ceramic fibers, and may be solely composed of crystal grains or may contain a component, such as a sintering inhibitor, other than the crystal grains. The matrix in the CMC of this embodiment contains at least crystal grains and sintering inhibitors.

The "ceramic fibers" are a spun polycrystal ceramic, in particular, a threadlike polycrystal ceramic. The ceramic fibers are classified into "short ceramic fibers" and "continuous ceramic fibers" according to their fiber length. In this embodiment, the "short ceramic fibers" are ceramic fibers having a fiber length of less than 500 $\mu$m and the "continuous ceramic fibers" are ceramic fibers (ceramic fibers having a fiber length of 500 $\mu$m or more) that are not the short ceramic fibers. In addition, the ceramic fibers may be independent single fibers or fiber bundles.

A "fiber bundle" is a ceramic fiber in which multiple fibers have been assembled. A fiber bundle may be in a state where two or more different ceramic fibers have been assembled.

A "ceramic fiber cloth" is a woven cloth of ceramic fibers, in particular, a woven cloth of continuous ceramic fibers. It may also be a continuous ceramic fiber woven cloth of fiber bundles.

A "sintering inhibitor" (hereinafter may also be simply referred to as an "inhibitor") is a substance that has a function of inhibiting progress of sintering of crystal grains and continuous ceramic fibers in the heat treatment, and examples thereof include substances having a function of inhibiting grain growth of crystal grains in the heat treatment and substances having a function of inhibiting shrinkage in the heat treatment.

An "average inhibitor particle size" is an average particle size of an inhibitor and is an average particle size of particles of an inhibitor determined by image analysis of an EDS mapping image (hereinafter may be simply referred to as the "mapping image") of elements corresponding to the inhibitor contained in the ceramic matrix of the CMC as observed with a field-emission scanning microscope (for example, JSM-7600F produced by JEOL Ltd., hereinafter this microscope may be referred to as "FE-SEM") equipped with an energy-dispersive characteristic X-ray spectroscope.

The average inhibitor particle size may be determined by obtaining an observation surface by polishing, with an Ar-beam cross-section polisher, a cross section of a CMC exposed by cutting with a diamond blade and image-analyzing a mapping image obtained by FE-SEM observation of the observation surface under the following conditions.

Accelerating voltage: 7 kV
Observation magnification: 5000x
Resolution: 256 × 192 pixel

In the image analysis, image analysis software (for example, NS2K-PRO produced by Nanosystem Corporation) is used to capture, into the software, one gray-scale (256 gray levels with a pixel value of 0 indicating black and a pixel value of 255 indicating white) image obtained by superimposing mapping images of the elements corresponding to the inhibitor, and then the captured image is binarized and denoised. The particle sizes of 150 ± 50 particles of the inhibitor observed in the image after the denoising may be analyzed, and the average inhibitor particle size may be determined from the average value thereof.

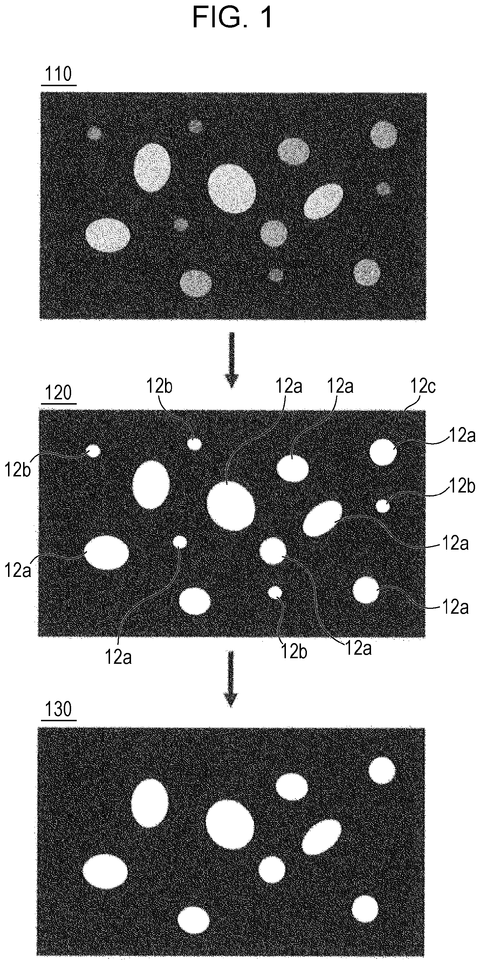

Fig. 1 is a schematic diagram illustrating one example of the image analysis process. In Fig. 1, (110) is a captured gray-scale mapping image, (120) is a binary image after binarizing and (130) is a processed image after denoising. The mapping image (110) is an image obtained by superimposing mapping images of elements (for example, zirconium and silicon) corresponding to multiple inhibitors. First, the mapping image (110) is binarized with the white intensity 50 as the threshold to obtain a binary image (120) constituted by regions with pixel values of 0 or 255. In the binary image (120), the particles (12a) of the inhibitors and the noises (12b) are detected as white regions (a pixel value of 255) and the crystal grains (12c) of the matrix are detected as black (a pixel value of 0) regions. Next, in the binary image (120), any white region constituted by one pixel is considered a noise, and the noise is replaced with black (a pixel value of 0) to obtain a processed image (130). In the processed image (130), white regions (regions constituted by two or more pixels and having a pixel value of 255) may be considered the inhibitors. The processed image (130) and the following equations are used to calculate the equivalent circle diameter (D) from the area (S) of each particle of the inhibitors, and then the obtained equivalent circle diameters may be averaged to determine the average inhibitor particle size. The number of particles of the inhibitors used in calculating the average inhibitor particle size may be 150 ± 50.

$$S = N \times L^2$$

$$D = 2 \times (S/\pi)^{1/2}$$

In the equations above, N represents the number (pixel) of unit pixels constituting each of the white regions, $L^2$ represents the area ($\mu m^2$/pixel) per unit pixel and $\pi$ represents the number Pi.

The "average centroid-centroid distance" is an average value of the centroid-centroid distances between the inhibitors, and is one of the indicators of the dispersibility of the inhibitors. This is the average value of the lengths of the straight-line segments connecting the centroids of the inhibitors and is determined by the following method.

First, by using the processed image obtained by the same method as in the measurement of the average inhibitor particle size, the coordinates (Xg, Yg) of the centroid of each white region is calculated from the following equations.

$$Xg = (X1 + X2 + \cdots + Xn)/n$$

$$Yg = (Y1 + Y2 + \cdots + Yn)/n$$

In the equations above, X1 to Xn each represent an x coordinate of a unit pixel constituting the white region, Y1 to Yn each represent a y coordinate of a unit pixel constituting the white region and n represents the number of unit pixels constituting the white region. Here, in calculating the coordinates, the long side and the short side of the processed image may be respectively deemed as an X axis and a Y axis, the intersection of the X axis and Y axis may be deemed to be zero and the number of pixels in the X axis direction from the intersection may be assumed to be the x coordinate while the number of pixels in the Y axis direction from the intersection may be assumed to be the y coordinate.

Next, the shortest length (straight line distance; μm) between the coordinates of the centroids of the white regions determined by the following standards (a) and (b) is assumed to be the centroid-centroid distance.

(a) Connect a centroid to a centroid without passing over another white region.
(b) If the straight line connecting the centroids intersects with another straight line connecting centroids, use the shorter straight line.

The centroid-centroid distance between 150 ± 50 particles of the inhibitors may be determined, and the average value thereof may be assumed to be the average centroid-centroid distance.

Analysis of the coordinates of the centroids, the lengths of segments (centroid-centroid distances) and average calculation may be performed by using image analysis software (for example, NS2K-PRO produced by Nanosystem Corporation).

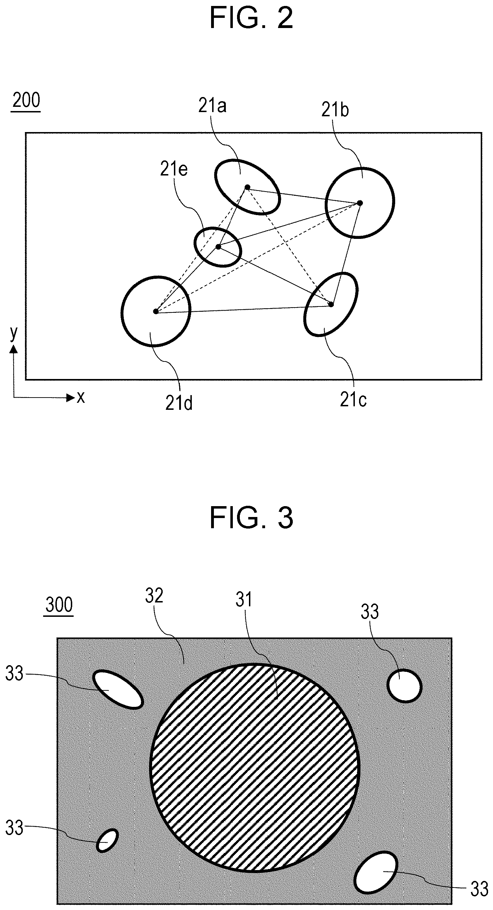

Fig. 2 is a schematic diagram illustrating one example of the centroid-centroid distance measurement. In a processed image (200), each of the white regions (21a to 21e) indicates a particle of the inhibitors, and the dot in each white region indicates the centroid. A solid line connecting a centroid to a centroid indicates the centroid-centroid distance. Note that a broken line (broken line ad) between the white regions 21a and 21d passes over the white region 21e, and a broken line (broken line bd) between the white regions 21b and 21d and a broken line (broken line ae) between the white regions 21a and 21e intersect straight lines that connect other white regions, and are longer than these straight lines. Thus, according to (a) above, the broken line ad is not considered a centroid-centroid distance, and according to (b) above, the broken lines bd and ae are not considered centroid-centroid distances.

The "average crystal grain size" is an average size of crystal grains constituting the ceramic matrix and is an average size of crystal grains determined by image analysis of the ceramic matrix of the CMC observed by using a typical scanning electron microscope (for example, IT100 produced by JEOL Ltd.).

The average crystal grain size may be determined by image analysis of a SEM observation diagram obtained by observing an observation surface, which is a cross section of the CMC exposed by cutting with a diamond blade, with a scanning electron microscope (hereinafter may also be referred to as the "SEM").

Accelerating voltage: 10 kV
Observation magnification: 20000x
Resolution: 2560 × 1920 pixel

The image analysis may be performed on crystal grains by the same method as that for the average inhibitor particle size except for that a gray scale OHP sheet in which crystal grains in the SEM observation diagram are traced is captured into the image analysis software and that the binarizing is performed with a threshold of 150. The average crystal grain size may be the average value of the crystal grain sizes obtained by the same method as that for the average inhibitor particle size from the obtained areas (S) and equivalent circle diameters (D) of the crystal grains. The number of crystal grains used in the calculation may be 100 ± 50.

The "average particle size" is the median diameter (D50) in a volume particle size distribution of a powder measured in accordance with JIS R 1629. The measurement may be performed under the following conditions by using a typical laser diffraction-scattering particle size distribution analyzer (for example, MT3300EX-II produced by MicrotracBEL Corp.).

Light source: semiconductor laser
Voltage: 780 mW
Refractive index of alumina: 1.77
Refractive index of zirconia: 2.17
Refractive index of silica: 1.48
Refractive index of solvent (water): 1.333
Calculation mode: MT3000EXII
The refractive indices of substances other than alumina, zirconia and silica may be 1.81.

The measurement sample may be a slurry in which the raw material powder is dispersed in pure water and from which slow aggregates have been removed by a dispersing treatment such as an ultrasonic treatment.

The "fiber volume fraction" is the volume fraction [vol%] of continuous ceramic fibers in the CMC. The fiber volume fraction is determine from the following equation.

$$\text{Fiber volume fraction [vol\%]} = (V_f/V_{CMC}) \times 100$$

In the equation above, $V_f$ represents the volume of the continuous ceramic fibers and $V_{CMC}$ represents the volume of the CMC. In addition, $V_f$ and $V_{CMC}$ are respectively obtained from the following equations.

$$V_f = m/\rho_f$$

$$V_{cmc} = A \times B \times t$$

In the equations above, m represents the mass [g] of the continuous ceramic fibers, $\rho_f$ represents the density [g/cm$^3$] of the continuous ceramic fibers, A represents the length [cm] of the CMC, B represents the width [cm] of the CMC and t represents the thickness [cm] of the CMC.

The "CMC density" is the actual density [g/cm$^3$] of the CMC and is a value obtained from the ratio [g/cm$^3$] of the volume measured by the Archimedes' method to the mass measured by using an electronic balance in accordance with JIS R 1634.

The "tensile strength" is a value obtained in accordance with JIS R 1656 with a typical strength tester (for example, AG-XPlus produced by Shimadzu Corporation) and a tensile test jig. A CMC having a width of 10 ± 1 mm, a length of 110 ± 10 mm and a thickness of 2 ± 1 mm and having aluminum tabs attached to both ends thereof may be used as the measurement sample, and the average value of the values obtained by measuring the tensile strength twice at a load speed of 0.5 mm/min may be assumed to be the tensile strength.

[CMC]

The CMC of this embodiment is a ceramic matrix composite comprising a ceramic matrix, continuous ceramic fibers and at least two sintering inhibitors. The presence of the inhibitors inhibits the grain growth of the ceramic matrix (hereinafter may be simply referred to as the "matrix") (in other words, grain growth of the ceramic crystal grains constituting the matrix) and sintering shrinkage, and the decrease in strength of the CMC after the heat resistance process is reduced. In addition, the presence of at least two inhibitors not only inhibits the grain growth of the crystal grains and the sintering shrinkage but also inhibits bonding of the crystal grains and the ceramic fibers caused by sintering (sinter bonding). Due to the synergetic action of the grain growth inhibition and the bonding reduction, the CMC of this embodiment offers actions different from those of the CMC composed of a matrix free of any inhibitors or the CMC containing only one inhibitor. It is considered that, as a result, compared to those typical CMCs, the CMC of this embodiment undergoes a less decrease in strength (in particular, the decrease in tensile strength) after a heat resistance process that involves a high temperature of 1000°C or higher and takes a longer period of time.

The structure of the CMC of this embodiment will now be described with reference to a schematic diagram. Fig. 3 is a schematic diagram illustrating a portion of the CMC of this embodiment and is a cross-sectional view of the CMC obtained by cutting the CMC in the thickness direction (the direction perpendicular to the direction in which the continuous ceramic fibers extend). A CMC (300) of this embodiment is constituted by a continuous ceramic fiber (31), crystal grains (32), and inhibitors (33). The matrix is constituted by the crystal grains (32) and the inhibitors (33). In the CMC (300), the matrix has a structure in which the inhibitors are dispersed at the interfaces between the crystal grains. Due to this structure, the CMC (300) of this embodiment has a structure in which the matrix (32 and 33) and the continuous ceramic fiber (31) are unified, and as a result, the matrix (32 and 33) is reinforced by the continuous ceramic fiber (31). For the sake of convenience, the crystal grains (32) in Fig. 3 are depicted as one homogeneous structure and individual crystal grains are not clearly illustrated; however, actually, there are multiple crystal grains.

The continuous ceramic fibers in the CMC of this embodiment are a member that reinforces the matrix in the CMC. The continuous ceramic fibers may be any continuous fibers composed of a ceramic, and may be composed of the same ceramic as the matrix or a different ceramic from the matrix. The continuous ceramic fibers are preferably continuous ceramic fibers of a type different from that of the matrix in order to inhibit sinter bonding after long hours of the heat resistance process. The continuous ceramic fibers are preferably at least one selected from the group consisting of continuous silicon carbide fibers, continuous alumina fibers, continuous mullite fibers and continuous fibers composed of alumina and mullite, and are more preferably at least one selected from the group consisting of continuous alumina fibers, continuous mullite fibers and continuous fibers composed of alumina and mullite.

From the viewpoint of strength, the continuous ceramic fibers are preferably continuous alumina fibers. Meanwhile, from the viewpoint of the heat resistance, the continuous ceramic fibers are preferably at least one of continuous mullite fibers and continuous fibers composed of alumina and mullite, and are more preferably continuous fibers composed of alumina and mullite.

In this embodiment, an example of the continuous fibers composed of alumina and mullite are continuous fibers that have an alumina ($Al_2O_3$)-to-mullite ($3Al_2O_3.2SiO_2$) mass ratio of 30 mass%:70 mass% to 55 mass%:45 mass%.

To be suitable for the use that involves long hours of exposure to a high temperature of 1000°C or higher, the continuous ceramic fibers are preferably continuous ceramic fibers that contain an $\alpha$-alumina structure in the crystal structure and preferably have an $Al_2O_3$ content of 60 mass% or more and 100 mass% or less, continuous ceramic fibers that contain an $\alpha$-alumina structure in the crystal structure and have an $Al_2O_3$ content of 80 mass% or more and less than 100 mass% or continuous ceramic fibers that have an $\alpha$-alumina structure and a mullite structure as the crystal structure and have an $Al_2O_3$ content of 80 mass% or more and less than 100 mass%. In order for the matrix containing at least two inhibitors to more easily exhibit the effect of reducing the decrease in strength of the CMC after the heat exposure process, the continuous ceramic fibers are preferably continuous ceramic fibers that have an $\alpha$-alumina structure and a mullite structure as the crystal structure and have an $Al_2O_3$ content of 80 mass% or more and 95 mass% or less and a $SiO_2$ content of more than 5 mass% and less than 20%.

The continuous ceramic fibers are at least one of fiber bundles or a ceramic fiber cloth, are preferably a ceramic fiber cloth, and are more preferably a ceramic fiber cloth obtained by weaving fiber bundles.

The ceramic matrix (matrix) in the CMC of this embodiment is a member, in the CMC, that is reinforced by the continuous ceramic fiber. The matrix (specifically, the crystal grains constituting the matrix) is at least one of an oxide ceramic or a non-oxide ceramic, is preferably an oxide ceramic, is more preferably at least one selected from the group consisting of alumina, mullite and silica, yet more preferably at least one of alumina and mullite and preferably contains at least alumina. From the viewpoint of strength, the matrix is preferably alumina. From the viewpoint of the heat resistance, the matrix is preferably at least one of alumina and mullite and is more preferably mullite. When the crystal grains are at least one of alumina and mullite, are alumina or are $\alpha$-alumina, the CMC of this embodiment exhibits higher strength and heat resistance.

The average crystal grain size is, for example, 0.05 $\mu$m or more or 0.1 $\mu$m or more and 10 $\mu$m or less or 5 $\mu$m or less. A preferable average crystal grain size is, for example, 0.05 $\mu$m or more and 10 $\mu$m or less or 0.1 $\mu$m or more and 5 $\mu$m or less. In this manner, the peripheries of the continuous ceramic fibers are easily filled with crystal grains, and the strength of the CMC tends to increase.

The CMC of this embodiment contains at least two sintering inhibitors (inhibitors). When the number of inhibitors is less than 2, the grain growth of the crystal grains easily occurs. In addition, sinter bonding is likely to occur when the CMC is exposed to a high-temperature atmosphere for a long period of time. As a result, the decrease in strength after exposure to a high-temperature atmosphere increases. The number of inhibitors may be 2 or more and 5 or less, 2 or more and 4 or less, 2 or more and 3 or less or 2.

The inhibitors are preferably contained in the matrix either partly or entirely, and are more preferably contained in the matrix entirely. In this manner, the crystal grain growth inhibiting effect is more easily obtained.

The inhibitors may be compounds having compositions different from the matrix, more specifically, compounds having compositions different from the crystal grains constituting the matrix. Examples of the inhibitors include oxides that contain at least one selected from the group consisting of silicon, aluminum, germanium, zirconium, yttrium, titanium, hafnium, magnesium, scandium and lanthanoid elements, oxides containing at least one selected from the group consisting of silicon, aluminum, zirconium, yttrium, titanium, magnesium, scandium and lanthanoid elements are preferable and oxides containing at least one selected from the group consisting of silicon, aluminum, zirconium, yttrium and lanthanoid elements are more preferable.

Specific examples of the inhibitors contained in the matrix include two or more selected from the group consisting of silica ($SiO_2$), germania ($GeO_2$), zirconia ($ZrO_2$), yttria ($Y_2O_3$), titania ($TiO_2$), hafnia ($HfO_2$), magnesia ($MgO$), scandia ($Sc_2O_3$), lanthanum oxide ($La_2O_3$), cerium oxide ($CeO_2$), praseodymium oxide ($Pr_2O_3$), neodymium oxide ($Nd_2O_3$), samarium oxide ($Sm_2O_3$), europium oxide ($Eu_2O_3$), gadolinium oxide ($Gd_2O_3$), terbium oxide ($Tb_2O_3$), erbium oxide ($Er_2O_3$), ytterbium oxide ($Yb_2O_3$), lutetium oxide ($Lu_2O_3$) and mullite ($3Al_2O_3.2SiO_2$), two or more selected from the group consisting of silica, zirconia, yttria, ytterbium oxide and mullite are preferable and two or more selected from the group consisting of silica, zirconia, yttria and ytterbium oxide are more preferable. Zirconia contained in the CMC of this embodiment is zirconia in which a stabilizing element is dissolved, is preferably zirconia in which yttrium is dissolved, is more preferably zirconia in which 2 mol% or more and 4 mol% or less of yttrium in terms of $Y_2O_3$ is dissolved and more preferably zirconia in which 3 mol% of yttrium in terms of $Y_2O_3$ is dissolved (hereinafter may also be referred to as "3YSZ").

Examples of the average inhibitor particle size include 0.20 $\mu$m or more, 0.25 $\mu$m or more, 0.30 $\mu$m or more, more than 0.35 $\mu$m or 0.36 $\mu$m or more and 0.90 $\mu$m or less, 0.80 $\mu$m or less, 0.70 $\mu$m or less, 0.50 $\mu$m or less or 0.45

μm or less. Examples of the preferable average inhibitor particle size is, for example, 0.20 μm or more and 0.90 μm or less, 0.25 μm or more and 0.50 μm or less and 0.30 μm or more and 0.45 μm or less.

In order for the inhibitors to be dispersed in the matrix and in order to smoothly reduce shrinkage of the matrix in the heat resistance process, the average centroid-centroid distance is, for example, 0.6 μm or more, 0.8 μm or more or 0.9 μm or more and 5.0 μm or less, 4.5 μm or less or 2.0 μm or less. Examples of the preferable average centroid-centroid distance is, for example, 0.6 μm or more and 5.0 μm or less, 0.6 μm or more and 2.0 μm or less, 0.8 μm or more and 2.0 μm or less and 0.9 μm or more and 2.0 μm or less.

The CMC of this embodiment preferably contains at least silica as the inhibitor. The presence of silica serving as the inhibitor easily inhibits the grain growth of the crystal grains and reduces shrinkage caused by the heat resistance process. As a result, a CMC having higher heat resistance is easily obtained. In particular, when the matrix is alumina, in other words, when the matrix is composed of alumina crystal grains, the effect of inhibiting the grain growth of crystal grains is more easily obtained.

The inhibitors contained in the CMC of this embodiment are preferably silica and at least one selected from the group consisting of zirconia, yttria, ytterbium oxide and mullite, are more preferably silica and at least one selected from the group consisting of zirconium oxide, ytterbium oxide and hafnium oxide and yet more preferably silica and zirconia. When these oxides are contained as inhibitors in addition to silica, the growth of crystal grains can be inhibited with a smaller amount of silica. It is considered that, in this manner, even when the CMC is exposed to a process, such as a heat exposure process, for a long period of time, excess growth of crystal grains is inhibited and sintering of the matrix and sinter bonding of the matrix and the continuous ceramic fibers are reduced. As a result, the decrease in strength of CMC caused by long hours of exposure to a high temperature of 1000°C or higher is further reduced.

In the CMC of this embodiment, the amounts of the ceramic matrix, the continuous ceramic fibers and at least two sintering inhibitors contained therein may be any so long as the decrease in strength after the heat resistance process is reduced. For example, the mass ratio (hereinafter also referred to as the "fiber content") of the continuous ceramic fibers to the mass of the CMC of this embodiment is 50 mass% or more or 55 mass% or more and less than 100 mass%, 70 mass% or less or 60 mass% or less. Examples of the preferable fiber content include 50 mass% or more and 70 mass% or less, 50 mass% or more and 60 mass% or less and 55 mass% or more and 60 mass% or less.

Similarly, for example, the total mass ratio of the matrix and the inhibitors (hereinafter also referred to as the "base material content") to the mass of the CMC of this embodiment is less than 50 mass% or less than 45 mass% and 0 mass% or more, more than 30 mass%, or 40 mass% or more. Examples of the preferable base material content include more than 30 mass% and less than 50 mass%, more than 40 mass% and less than 50 mass% and more than 40 mass% and less than 55 mass%.

Furthermore, the mass of the inhibitors (hereinafter also referred to as the "inhibitor content") relative to the mass of the CMC of this embodiment is, for example, more than 0 mass%, 0.1 mass% or more, 0.2 mass% or more, 0.5 mass% or more or 0.7 mass% or more and 3 mass% or less, 2.5 mass% or less, 2.0 mass% or less, 1.5 mass% or less or 1 mass% or less. A preferable inhibitor content is, for example, more than 0 mass% and 3 mass% or less or 0.5 mass% or more and 2.5 mass% or less. To further reduce the decrease in strength of the CMC after the heat exposure process, the inhibitor content is, for example, more than 0 mass% and 1.5 mass% or less, 0.5 mass% or more and 1.5 mass% or less, 0.7 mass% or more and 1.5 mass% or less, or 0.7 mass% or more and 1 mass% or less.

The fiber content and the base material content may be determined as below.

Fiber content [mass%]

= {mass of continuous ceramic fibers [g] /mass of CMC [g]} × 100

Base material content [mass%]

= 100 - fiber content [mass%]

Inhibitor content [mass%]

= {mass of inhibitors [g] /mass of CMC [g]} × 100

The mass of the continuous ceramic fibers is determined from the mass of the CMC [g], the density of the continuous ceramic fibers [g/cm$^3$] and the continuous ceramic fiber content [vol%] determined from the observation diagram of the CMC cross section. The mass of the inhibitors is the oxide-based mass of the inhibitors determined from the EDS mapping of the matrix observed in the CMC cross section.

In the CMC of this embodiment, the mass ratio of the inhibitors in the ceramic matrix (hereinafter this ratio may also be referred to as the "inhibitor ratio") is, for example, more than 0, 1.0 or more or 1.5 or more and 7.0 or less, 3.5 or less, or 3.0 or less. A preferable inhibitor ratio is, for example, more than 0 and 6.0 or less. In order to smoothly offer the effect of reducing shrinkage caused by the heat treatment, the inhibitor ratio is preferably more than 0 and 5.5 or less, 1.0 or more and 3.5 or less, or 1.5 or more and 3.0 or less.

The mass ratio of silica (hereinafter also referred to as the "silica ratio") in the inhibitors of the CMC of this embodiment may be any as long as it is more than 0, 0.1 or more, 0.2 or more or 0.3 or more, and may be less than 1, 0.8 or less, or 0.6 or less, for example. A preferable silica ratio is, for example, more than 0 and less than 1, and when the silica ratio is 0.1 or more and 0.8 or less or 0.1 or more and 0.6 or less, the decrease in strength after the heat exposure process is easily reduced although the grain growth inhibiting effect is small. Furthermore, when the silica ratio is 0.2 or more and 0.8 or less or 0.2 or more and 0.6 or less, excessive heat shrinkage of, in particular, the matrix containing alumina crystal grains is easily reduced.

In calculating the composition of this embodiment, values in terms of oxides may be used for the matrix and the inhibitors. For example, the compositions of the CMC of this embodiment containing silica and zirconia as the inhibitors, alumina as the matrix and continuous mullite fibers as the continuous ceramic fibers may be determined as follows.

$$\text{Inhibitor ratio}$$

$$= \{(SiO_2 + ZrO_2)\ [g]$$

$$/(Al_2O_3 + SiO_2 + ZrO_2)\ [g]\} \times 100$$

$$\text{Silica ratio}$$

$$= \{SiO_2\ [g]/(SiO_2 + ZrO_2)\ [g]\} \times 100$$

$$\text{Inhibitor mass } [g] = SiO_2 + ZrO_2\ [g]$$

$Al_2O_3$, $SiO_2$ and $ZrO_2$ may be determined from the EDS map of the matrix observed in the CMC cross section.

The fiber volume fraction of the CMC of this embodiment is, for example, 30 vol% or more and 60 vol% or less. When the fiber volume fraction satisfies this range, it becomes easier to keep the shape of the CMC and thus the strength of the CMC tends to be high.

The density of the CMC of this embodiment differs depending on the type of the matrix, etc., and may be any, for example, 2.40 g/cm$^3$ or more and 3.20 g/cm$^3$ or less or 2.55 g/cm$^3$ or more and 3.00 g/cm$^3$ or less.

The tensile strength of the CMC of this embodiment (in particular, the tensile strength of the CMC not subjected to the heat resistance process) differs depending on the types of the matrix and the continuous ceramic fibers, but can be, for example, 140 MPa or more or 150 MPa or more and 300 MPa or more or 280 MPa or less or can be, for example, 140 MPa or more and 300 MPa or less or 150 MPa or more and 280 MPa or less.

The ratio of the tensile strength of the CMC of this embodiment after the heat exposure process to that before the heat exposure process (hereinafter this ratio may also be referred to as the "strength retaining rate") is preferably high, for example, 80% or more or 85% or more and 150% or less, 140% or less, 100% or less or 99% or less. Examples of the preferable strength retaining rate include 80% or more and 150% or less, 80% or more and 100% or less and 80% or more and 90% or less. The tensile strength after the heat exposure process may be higher than the tensile strength before the heat exposure process.

The CMC of this embodiment can be used in known usages of CMCs and can be used in members that contain the same, in particular, in the usage for which heat resistance is required, and furthermore can be used in at least one selected from the group consisting of heat-resistant filters, turbine members and atomic nuclear-related members.

[Method for manufacturing CMC]

A method for manufacturing a ceramic matrix composite (CMC) according to an embodiment will now be described.

The CMC of this embodiment may be produced by any method as long as the CMC has the above-described structure. A preferable method for manufacturing a CMC according to this embodiment is, for example, a method for manufacturing a ceramic matrix composite, the method comprising a step of obtaining a mixture by mixing continuous ceramic fibers and a slurry containing a ceramic matrix source and at least two sintering inhibitor sources, a step of obtaining a green body by solidifying the mixture and a step of firing the green body.

The manufacturing method of this embodiment includes a step (hereinafter may also be referred to as the "mixing step") of obtaining a mixture by mixing continuous ceramic fibers and a slurry (hereinafter may also be referred to as the "raw material slurry") containing a ceramic matrix source (hereinafter may also be referred to as the "matrix source") and at least two sintering inhibitor sources.

The mixing method may be any method, and may be, for example, impregnating the continuous ceramic fibers with the raw material slurry, specifically, at least one of a vacuum impregnation process and a pressure impregnation process.

An example of the vacuum impregnation process is a process under the following conditions.

Impregnation atmosphere: degree of vacuum of 85% or more or 90% or more and

degree of vacuum of 100% or less, less than 100% or 99% or less Impregnation temperature: 0°C or higher or 10°C or higher and

40°C or lower or 35°C or lower

An example of the pressure impregnation process is a process under the following conditions.

Impregnation pressure: 0.11 MPa or more or 0.15 MPa or more and

2.0 MPa or lower or 1.8 MPa or lower

Impregnation temperature: 0°C or higher or 10°C or higher and

40°C or lower or 35°C or lower

An example of the preferable mixing method is impregnating the continuous ceramic fibers with the raw material slurry at room temperature in vacuum with a degree of vacuum of 90% or higher, in particular, impregnating the continuous ceramic fibers with the raw material slurry at 25°C in vacuum with a degree of vacuum of 95% or higher and lower than 100%.

The raw material slurry can be used as the slurry for manufacturing the CMC and contains the matrix source and the inhibitor sources, preferably, a solvent in addition to the matrix source and the inhibitor sources. The matrix source may be any matrix or precursor thereof of the CMC, is preferably at least one selected from the group consisting of alumina, mullite and silica, is more preferably at least one of $\alpha$-alumina and mullite and is yet more preferably $\alpha$-alumina.

The matrix source may be in any state dispersible in the raw material slurry, may be at least one of a powder and colloidal particles and is more preferably a powder. Specific examples of the matrix source include at least one selected from the group consisting of an alumina powder, a mullite powder and a silica powder, at least one of an $\alpha$-alumina powder and a mullite powder is preferable and an $\alpha$-alumina powder is more preferable.

The average particle size of the matrix source is, for example, 0.01 $\mu$m or more or 0.1 $\mu$m or more and 5 $\mu$m or less or 3 $\mu$m or less. A preferable average particle size is, for example, 0.01 $\mu$m or more and 3 $\mu$m or less or 0.1 $\mu$m or more and 0.5 $\mu$m or less. When the average particle size satisfies this range, the matrix source is evenly dispersed around the continuous ceramic fibers.

The raw material slurry contains at least two sintering inhibitor sources (hereinafter may also be referred to as the "inhibitor sources") and the inhibitor sources preferably contain elements different from each other. Two or more inhibitor sources may be contained in the raw material slurry. Since it is not necessary to contain more inhibitor sources than needed, the raw material slurry may contain 2 or more and 5 or less, 2 or more and 4 or less, 2 or more and 3 or less or 2 inhibitor sources.

The sintering inhibitor sources (hereinafter may also be referred to as the "inhibitor sources") may be any compounds having compositions different from the matrix source, and examples thereof include compounds containing at least one (hereinafter may also be referred to as "silicon etc.") selected from the group consisting of silicon, aluminum, germanium, zirconium, yttrium, titanium, hafnium, magnesium, scandium and lanthanoid elements. These compounds may be at least one compound selected from the group consisting of oxides, hydroxides, oxyhydroxides, oxynitrides, nitrides, oxycarbides, carbides, chlorides, carbonate salts, nitrate salts, sulfate salts and acetate salts and are preferably oxides.

Examples of the preferable inhibitor source include oxides, nitrides and carbides that contain at least one selected from the group consisting of silicon, aluminum, zirconium, yttrium, titanium, magnesium, scandium and lanthanoid elements. Specific examples of the inhibitor source include at least one selected from the group consisting of silica ($SiO_2$), silicon nitride ($Si_3N_4$), silicon carbide (SiC), zirconia ($ZrO_2$), zirconium nitride (ZrN), zirconium carbide (ZrC), zirconium chloride ($ZrCl_4$), yttria ($Y_2O_3$), yttrium nitride (YN), yttrium carbide ($Y_2C_3$), yttrium chloride ($YCl_3$), yttrium carbonate ($Y_2(CO_3)_3$), yttrium sulfate ($Y_2(SO_4)_3$), titania ($TiO_2$), titanium nitride (TiN), titanium carbide (TiC), titanium chloride ($TiCl_4$), magnesia (MgO), magnesium nitride ($Mg_3N_2$), magnesium carbide ($Mg_2C_3$), magnesium chloride ($MgCl_2$), magnesium carbonate ($MgCO_3$), magnesium nitrate ($Mg(NO_3)_2$), magnesium sulfate ($MgSO_4$), magnesium acetate ($Mg(CH_3COO)_2$), scandia ($Sc_2O_3$), scandium nitride (ScN), scandium carbide (ScC), scandium chloride ($ScCl_3$),

scandium carbonate ($Sc_2(CO_3)_3$), scandium nitrate (Sc(NOs)s), scandium sulfate ($Sc_2(SO_4)_3$), scandium acetate ($Sc(CH_3COO)_3$), lanthanum oxide ($La_2O_3$), lanthanum nitride (LaN), lanthanum carbide ($C_2La$), lanthanum chloride ($LaCl_3$), lanthanum carbonate ($La_2(CO_3)_3$), lanthanum nitrate ($La(NO_3)_3$), lanthanum sulfate ($La_2(SO_4)_3$), lanthanum acetate ($La(CH_3COO)_3$), cerium oxide ($CeO_2$), cerium nitride (CeN), cerium carbide ($CeC_2$), cerium chloride ($CeCl_3$), cerium carbonate ($Ce_2(CO_3)_3$), cerium nitrate ($Ce(NO_3)_3$), cerium sulfate ($Ce(SO_4)_2$), cerium acetate ($Ce(CH_3COO)_3$), praseodymium oxide ($Pr_2O_3$), praseodymium nitride (PrN), praseodymium chloride ($PrCl_3$), praseodymium carbonate ($Pr_2(CO_3)_3$), praseodymium nitrate ($Pr(NO_3)_3$), praseodymium sulfate ($Pr_2(SO_4)_3$), praseodymium acetate ($Pr(CH_3COO)_3$), neodymium oxide ($Nd_2O_3$), neodymium nitride (NdN), neodymium carbide ($C_2Nd$), neodymium chloride ($NdCl_3$), neodymium carbonate($Nd_2(CO_3)_3$), neodymium nitrate ($Nd(NO_3)_3$), neodymium sulfate ($Nd_2(SO_4)_3$), neodymium acetate ($Nd(CH_3COO)_3$)), samarium oxide ($Sm_2O_3$), samarium nitride (SmN), samarium carbide ($C_2Sm$), samarium chloride ($SmCl_3$), samarium carbonate ($Sm_2(CO_3)_3$), samarium nitrate ($Sm(NO_3)_3$), samarium sulfate ($Sm_2(SO_4)_3$), samarium acetate ($Sm(CH_3COO)_3$), europium oxide ($Eu_2O_3$), europium nitride (EuN), europium carbide ($C_2Eu$), europium chloride ($EuCl_3$), europium carbonate ($Eu_2(CO_3)_3$), europium nitrate ($Eu(NO_3)_3$), europium sulfate ($Eu_2(SO_4)_3$), europium acetate ($Eu(CH_3COO)_3$), gadolinium oxide ($Gd_2O_3$), gadolinium nitride (GdN), terbium oxide ($Tb_4O_7$), terbium chloride ($TbCl_3$), terbium carbonate ($Tb_2(CO_3)_3$), terbium nitrate ($Tb(NO_3)_3$), terbium sulfate ($Tb_2(SO_4)_3$), terbium acetate ($Tb(CH_3COO)_3$), erbium oxide ($Er_2O_3$), erbium nitride (ErN), erbium chloride ($ErCl_3$), erbium carbonate ($Er_2(CO_3)_3$), erbium nitrate ($Er(NO_3)_3$), erbium sulfate ($Er_2(SO_4)_3$), erbium acetate ($Er(CH_3COO)_3$), ytterbium oxide ($Yb_2O_3$), ytterbium nitride (YbN), ytterbium chloride ($YbCl_3$), ytterbium carbonate ($Yb_2(CO_3)_3$), ytterbium nitrate ($Yb(NO_3)_3$), ytterbium sulfate ($Yb_2(SO_4)_3$), ytterbium acetate ($Yb(CH_3COO)_3$), lutetium oxide ($Lu_2O_3$), lutetium nitride (LuN), lutetium carbide ($C_2Lu$), lutetium chloride ($LuCl_3$), lutetium carbonate ($Lu_2(CO_3)_3$), lutetium nitrate (Lu(NOs)s), lutetium sulfate ($Lu_2(SO_4)_3$), lutetium acetate ($Lu(CH_3COO)_3$) and mullite ($3Al_2O_3.2SiO_2$). Zirconia may be zirconia in which a stabilizing element is dissolved, is preferably zirconia in which yttrium is dissolved, is more preferably zirconia in which 2 mol% or more and 4 mol% or less of yttrium in terms of $Y_2O_3$ is dissolved and is yet more preferably 3YSZ.

Examples of more preferable inhibitor sources include at least two selected from the group consisting of silica, zirconia, yttria, titania, magnesia, scandia, lanthanum oxide, cerium oxide, praseodymium oxide, neodymium oxide, samarium oxide, europium oxide, gadolinium oxide, terbium oxide, erbium oxide, ytterbium oxide, lutetium oxide and mullite

Examples of yet more preferable inhibitor sources include oxides containing at least silicon and at least two selected from the group consisting of silica, zirconia, yttria, ytterbium oxide and mullite, silica and at least one selected from the group consisting of zirconia, yttria, ytterbium oxide and mullite are preferable, silica and at least one selected from the group consisting of zirconium oxide, ytterbium oxide and hafnium oxide are more preferable and silica and zirconia are yet more preferable.

The inhibitor sources are preferably at least one of powders and colloidal particles and are more preferably powders. Specifically, the inhibitor sources are preferably at least two selected from the group consisting of a silica powder, a zirconia powder, an yttria powder, a titania powder, a magnesia powder, a scandia powder, a lanthanum oxide powder, a cerium oxide powder, a praseodymium oxide powder, a neodymium oxide powder, a samarium oxide powder, a europium oxide powder, a gadolinium oxide powder, a terbium oxide powder, an erbium oxide powder, an ytterbium oxide powder, a lutetium oxide powder and a mullite powder, is more preferably at least two selected from the group consisting of silica powder, a zirconia powder, an yttria powder, an ytterbium oxide powder and a mullite powder, is more preferably a silica powder and at least one selected from the group consisting of a zirconia powder, an yttria powder, an ytterbium oxide powder and a mullite powder, is yet more preferably a silica powder and at least one selected from the group consisting of a zirconium oxide powder, an ytterbium oxide powder and a hafnium oxide powder and still yet more preferably a silica powder and a zirconia powder.

The average particle size of the inhibitor sources is preferably 0.01 μm or more, 0.04 μm or more or 0.1 μm or more and 10 μm or less, 8 μm or less or 0.6 μm or less. When the average particle size satisfies this range, the inhibitor sources do not easily aggregate in the raw material slurry and the inhibitors easily become dispersed evenly in the matrix in the obtained CMC.

The content of the inhibitor sources (hereinafter may also be referred to as the "inhibitor source content" and when then inhibitors are silica etc., the content may be referred to as the "silica source content" etc.) relative to the total mass of the metal elements, in terms of oxides, contained in the matrix source and the metal elements, in terms of oxides, contained in the inhibitor sources in the raw material slurry is, for example, 1.0 mass% or more or 1.5 mass% or more and 3.5 mass% or less or 3.0 mass% or less. The inhibitor source content may be an amount similar to the intended matrix sintering inhibitor content in the CMC.

The inhibitor source content is the mass ratio [mass%] of the metal elements, in terms of oxides, contained in the inhibitor sources relative to the total mass of the metal elements, in terms of oxides, contained in the matrix source and the metal elements, in terms of oxides, contained in the inhibitor sources; for example, in the case of a raw material slurry containing silica and zirconia as the inhibitor sources and alumina as the matrix source, the inhibitor source content is determined by {(mass of silica [g] + mass of zirconia [g])/(mass of silica + mass of zirconia + mass of alumina) [g] }

$\times$ 100, and the silica source content is determined by {(mass of silica [g])/(mass of silica + mass of zirconia + mass of alumina) [g]} $\times$ 100.

The solvent contained in the raw material slurry may be any solvent in which the matrix source and the inhibitor sources disperse, and is, for example, at least one selected from the group consisting of water, methanol, ethanol, 1-propanol, 2-propanol, 1-butanol, 2-butanol, butyl alcohol, isobutyl alcohol, acetone, methyl ethyl ketone, methyl isobutyl ketone, diisobutyl ketone, cyclohexanone, diacetone alcohol, benzene, toluene, xylene, ethyl acetate, methyl acetate, butyl acetate, methoxybutyl acetate, isobutyl acetate, n-hexane, heptane, cyclohexane, methylcyclohexane, ethylene glycol, ethylene glycol monomethyl ether, ethylene glycol monoethyl ether, ethylene glycol monobutyl ether, propylene glycol monomethyl ether, N,N-dimethylformamide, tetrahydrofuran, N-methyl-2-pyrrolidone, 1,4-dioxane and styrene, is preferably at least one selected from the group consisting of water, methanol, ethanol, 1-propanol, 2-propanol, 1-butanol, 2-butanol, butyl alcohol and isobutyl alcohol, is more preferably at least one of water and ethanol and is still more preferably water.

In order to more evenly disperse the matrix source and the inhibitor sources in the solvent, the raw material slurry may contain a dispersant. The dispersant is, for example, at least one of a dispersant that has high affinity with the matrix source and a dispersant that has high solubility in the solvent and is, for example, at least one selected from the group consisting of anionic high-molecular-weight dispersants, cationic high-molecular-weight dispersants, nonionic high-molecular-weight dispersants, anionic low-molecular-weight dispersants, cationic low-molecular-weight dispersants, nonionic low-molecular-weight dispersants, inorganic acids and inorganic salts. Specifically, the dispersant is preferably at least one selected from the group consisting of ammonium polyacrylate, ammonium polymethacrylate, sodium polyacrylate, sodium polymethacrylate, polyethyleneimine, polyethylene glycol, sodium dodecylsulfonate, sodium dodecylbenzenesulfonate, benzalkonium chloride, distearyldimethylammonium chloride, polyoxyethylene alkyl ether, pentaethylene glycol monododecyl ether, octaethylene glycol monododecyl ether, polyoxyethylene alkyl phenyl ether, dilute nitric acid, dilute hydrochloric acid, dilute sulfuric acid, phosphoric acid and sodium tripolyphosphate, is more preferably at least one selected from the group consisting of ammonium polyacrylate, ammonium polymethacrylate, sodium polyacrylate, sodium polymethacrylate, polyethyleneimine, dilute nitric acid, dilute hydrochloric acid, dilute sulfuric acid and phosphoric acid, is yet more preferably at least one selected from the group consisting of ammonium polyacrylate, ammonium polymethacrylate, dilute nitric acid and dilute hydrochloric acid and further more preferably at least one of dilute nitric acid and dilute hydrochloric acid.

The dispersant content is, for example, 0.01 mass% or more or 0.05 mass% or more and 10 mass% or less or 8 mass% or less relative to the total mass of the metal elements, in terms of oxides, contained in the matrix source, the metal elements, in terms of oxides, contained in the inhibitor sources, the solvent and the dispersant.

The solid component concentration of the raw material slurry is, for example, 30 mass% or more or 40 mass% or more and 90 mass% or less or 85 mass% or less. The solid component concentration of the raw material slurry is the ratio [mass%] of the total mass of the metal elements, in terms of oxides, contained in the matrix source and the metal elements, in terms of oxides, contained in the inhibitor sources relative to the total mass of the metal elements, in terms of oxides, contained in the matrix source, the metal elements, in terms of oxides, contained in the inhibitor sources and the solvent. For example, in the case of the raw material slurry containing alumina as the matrix source, silica and zirconia as the inhibitor sources and water as the solvent, the solid component concentration is determined by {(mass of silica [g] + mass of zirconia [g] + mass of alumina [g])/(mass of silica + mass of zirconia + mass of alumina + mass of water) [g]} $\times$ 100. Here, the solid component concentration is also determined as the mass ratio of the residue obtained after drying out the solvent in the raw material slurry relative to the mass of the raw material slurry.

The method for preparing the raw material slurry may be any method with which the matrix source, the inhibitor sources and the solvent are mixed but is preferably mixing by grinding. A specific example of the method for preparing the raw material slurry is mixing and grinding a matrix source, inhibitor sources and a solvent in a ball mill. The grinding media used in the ball mill may be any that can remove slow aggregates of the matrix source and the inhibitor sources and may be ceramic balls having an average particle size larger than the average particle size of the matrix source, etc. An example of such grinding media is ceramic balls having a diameter of 0.5 mm or more and 20 mm or less or 1 mm or more and 15 mm or less. Examples of the ceramic balls include at least one of alumina balls and zirconia balls. In order to prevent entry of impurities during mixing and grinding, alumina balls are preferred as the grinding media.

The continuous ceramic fibers may be the same continuous ceramic fibers as those contained in the CMC, are preferably at least one selected from the group consisting of continuous silicon carbide fibers, continuous alumina fibers, continuous mullite fibers and continuous fibers composed of alumina and mullite and are more preferably at least one selected from the group consisting of continuous alumina fibers, continuous mullite fibers and continuous fibers composed of alumina and mullite. The continuous ceramic fibers are preferably continuous ceramic fibers that contain an $\alpha$-alumina structure in the crystal structure and preferably have an $Al_2O_3$ content of 60 mass% or more and 100 mass% or less, continuous ceramic fibers that contain an $\alpha$-alumina structure in the crystal structure and have an $Al_2O_3$ content of 80 mass% or more and less than 100 mass% or continuous ceramic fibers that have an $\alpha$-alumina structure and a mullite structure as the crystal structure and have an $Al_2O_3$ content of 80 mass% or more and less than 100 mass%. In order for the matrix containing at least two inhibitors to more easily exhibit the effect of reducing the decrease in strength of the CMC after the heat exposure process, the continuous ceramic fibers are preferably continuous ceramic fibers that have an $\alpha$-alumina structure and a mullite structure as the crystal structure and have an $Al_2O_3$ content of 80 mass% or more and 95 mass% or less and a $SiO_2$ content of more than 5 mass% and less than 20%.

The manufacturing method of this embodiment includes a step (hereinafter may also be referred to as the "forming step" of obtaining a green body by solidifying a mixture. As a result, a green body that serves as a precursor of the CMC of this embodiment is obtained. The forming method may be any method that forms the mixture into a particular shape, and examples thereof include at least one selected from the group consisting of a heating process, a freezing process, and an additive process. Here, the forming step may be a combination of the methods mentioned above or may involve performing the same process more than once.

An example of the heating process is a process under the following conditions.

Heating process temperature: 50°C or higher, 60°C or higher or 80°C or higher and 160°C or lower or 140°C or lower

Number of times the heating process is conducted: 1 or more and 5 or less

The heating process time may be adjusted as desired depending on the amount of the mixture to be processed and the heating process temperature, for example, 1 hour or longer and 10 hours or shorter or 2 hours or longer and 8 hours or shorter.

An example of the freezing process is a process under the following conditions.

Freezing temperature:

-200°C or higher or -180°C or higher and
-20°C or lower or -30°C or lower

Sublimation pressure:

0.001 MPa or more or 0.002 MPa or more and
0.05 MPa or less or 0.03 MPa or less

Number of times the process is performed: 1 or more and 5 or less

When the freezing process is to be conducted multiple times, the freezing temperature and the sublimation pressure may be under any desired conditions.

An example of the additive process is to mix an additive, such as a solidifier or a binder, with a mixture so as to form the mixture. The additive may be any known additive that can be used in manufacturing the CMC, and examples thereof include at least one selected from the group consisting of agar, gelatin, methylcellulose, camphene, sodium alginate, 2-hydroxyethyl acrylate, 4-hydroxybutyl acrylate, 6-hydroxyhexyl acrylate, acrylic acid, methacrylic acid, acrylamide, N,N'-methylenebisacrylamide, N,N'-ethylenebisacrylamide methacrylamide, polyethylene glycol diacrylate, methyl acrylate, methyl methacrylate, ethyl acrylate, ethyl methacrylate, butyl acrylate, urea, boron nitride (BN), aluminum nitride (AlN), silicon nitride ($Si_3N_4$), gallium nitride (GaN), zirconium nitride (ZrN), polyaluminum chloride ($[Al_2(OH)_nCl_{6-n}]_m$, $1 \leq n \leq 5$, $m \leq 10$), trimethoxyaluminum, triethoxyaluminum, tri-n-propoxyaluminum, tri-i-propoxyaluminum, tri-n-butoxyaluminum, tri-i-butoxyaluminum, tri-sec-butoxyaluminum, tri-t-butoxyaluminum, trimethoxyboron, triethoxyboron, tri-n-propoxyboron, tri-i-propoxyboron, tetramethoxysilane, tetraethoxysilane, tetra-n-propoxysilane, tetra-i-propoxysilane, tetra-n-butoxysilane, tetra-i-butoxysilane, tetra-n-butoxysilane, tetra-sec-butoxysilane, tetra-t-butoxysilane, methyltrimethoxysilane, ethyltrimethoxysilane, propyltrimethoxysilane, methyltriethoxysilane, ethyltriethoxysilane, propyltrimethoxysilane, propyltriethoxysilane, paraffin wax and polyvinyl alcohol.

The additive process is preferably at least one selected from the group consisting of a method of mixing a solidifier and a binder with a mixture, a method of mixing a solidifier and a mixture and a method of mixing a binder with a mixture and is more preferably a method of mixing a solidifier and a binder with a mixture.

In the manufacturing method of this embodiment, the mixing step and the forming step may be repeated and the method may include a mixing step performed under the same conditions except that the green body obtained in the forming step is used instead of the continuous ceramic fibers. For example, the manufacturing method of this embodiment includes one or more and five or less mixing steps and forming steps.

The method for manufacturing the CMC of this embodiment may include, prior to the firing of the green body, a step (hereinafter may also be referred to as the "calcining step") of calcining the green body to obtain a calcined body.

In the calcining step, the green body is calcined to obtain a calcined body. The calcining conditions may be any conditions under which necking between the particles of the matrix source proceeds and examples of the conditions are as follows.

Calcining atmosphere: oxidizing atmosphere or inert atmosphere, preferably air atmosphere

Calcining temperature:

800°C or higher or 850°C or higher and
lower than 1000°C or 900 ° C or lower

The calcining time may be changed as desired depending on the size of the green body and the characteristics of a calcining furnace to be used and may be, for example, 30 minutes or longer and 120 hours or shorter.
In the manufacturing method of this embodiment, the calcined body may be further subjected to a mixing step. This mixing step may be performed under the same conditions as those described above except that the calcined body is used instead of the green body. The calcined body after mixed with the raw material slurry may be calcined by any desired method.
When the method for manufacturing CMC of this embodiment includes the calcining step, the calcined body may be fired instead of the green body.
The manufacturing method of this embodiment includes a step (hereinafter may also be referred to as the "firing step") of firing the calcined body. As a result, the CMC of this embodiment is obtained. When the manufacturing method of this embodiment includes the calcining step, the calcined body may be fired instead of the green body. Firing may be performed under any conditions under which the sintering of the matrix source proceeds, and examples of the conditions are as follows.

Firing atmosphere: oxidizing atmosphere or inert atmosphere, preferably air atmosphere

Firing temperature:

1000°C or higher, 1100°C or higher or 1200°C or higher and
1500 ° C or lower, 1450 ° C or lower or 1400 ° C or lower

Number of times of firing: 1 or more and 5 or less

The firing time may be changed as desired depending on the size of the green body (or calcined body) and the characteristics of a firing furnace to be used and may be, for example, 30 minutes or longer and 120 hours or shorter. When firing is to be conducted multiple times, the firing atmosphere and the firing temperature may be any desired conditions.
For the sake of simplicity of the operation, firing is preferably normal-pressure firing. In this embodiment, the "normal pressure firing" is a firing method that involves heating a subject to be fired (green body, calcined body, or the like) without applying external force to the subject to be fired during the firing.

EXAMPLES

The embodiments will now be described in detail through examples. However, the embodiments are not limited by these examples.

(Average particle size)

The average particle size was determined in accordance with JIS R 1629 by using a laser diffraction-scattering particle size distribution meter (instrument name: MT3300EX-II produced by MicrotracBEL Corp.). The measurement conditions were as follows.
Light source: semiconductor laser
Voltage: 780 mW

Measurement sample: slurry prepared by dispersing a raw material powder in pure water
Refractive index of alumina: 1.77
Refractive index of zirconia: 2.17
Refractive index of silica: 1.48
Refractive index of solvent (water): 1.333
Calculation mode: MT3000EXII
The refractive indices of substances other than alumina, zirconia and silica were 1.81.

As a preliminary treatment, a sample and 0.2 mass% of ammonium polyacrylate were suspended in pure water to prepare a slurry, and then the slurry was dispersed for 3 minutes by using an ultrasonic homogenizer (instrument name: BRANSON SONIFIER 250 produced by Emerson Electric Co.).

(Fiber volume fraction)

The fiber volume fraction was calculated from the following equation.

$$\text{Fiber volume fraction [vol\%]} = (V_f/V_{CMC}) \times 100$$

$$V_f = m/\rho_f$$

$$V_{cmc} = A \times B \times t$$

In the equations above, Vf represents the volume of the continuous ceramic fibers, $V_{CMC}$ represents the volume of the CMC, m represents the mass [g] of the continuous ceramic fibers, $\rho_f$ represents the density [g/cm$^3$] of the continuous ceramic fibers, A represents the length [cm] of the CMC, B represents the width [cm] of the CMC and t represents the thickness [cm] of the CMC.

(CMC density)

The density was determined in accordance with JIS R 1634 from the ratio (g/cm$^3$) of the volume measured by the Archimedes' method relative to the mass measured by using an electronic balance. Prior to the measurement, the mass of the CMC after drying was measured and the CMC was placed in water and boiled for 3 hours as a preliminary treatment.

(Average inhibitor particle size)

The average inhibitor particle size was determined by obtaining an observation surface by polishing, with an Ar beam cross-section polisher, a cross section of the CMC exposed by cutting with a diamond blade, and image-analyzing a mapping image obtained by FE-SEM observation under the following conditions.

Accelerating voltage: 7 kV
Observation magnification: 5000x
Resolution: 256 $\times$ 192 pixel

The image analysis used image analysis software (instrument name: NS2K-PRO produced by Nanosystem Corporation) to capture, into the software, one gray-scale image obtained by superimposing the mapping images of the elements corresponding to the inhibitors, and then the captured image was binarized and denoised. The particle sizes of 150 $\pm$ 50 particles of the inhibitors observed in the image after the denoising were analyzed by the aforementioned method, and the average inhibitor particle size was determined from the average value thereof.

(Average centroid-centroid distance)

By using a processed image obtained by the same method as the measurement of the average inhibitor particle size and image analysis software (instrument name: NS2K-PRO produced by Nanosystem Corporation), the coordinates (Xg, Yg) of the centroid of each white region were calculated from the aforementioned equations. Next, the shortest length between the coordinates of the centroids of the white regions determined by the aforementioned standards (a) and (b) was assumed to be the centroid-centroid distance. The centroid-centroid distances of 150 $\pm$ 50 particles of the inhibitors were determined, and the average value thereof was assumed to be the average centroid-centroid distance.

(Average crystal grain size)

The average crystal grain size was determined by obtaining a SEM observation diagram of an observation surface which was a cross section of the CMC exposed by cutting with a diamond blade.

Accelerating voltage: 10 kV
Observation magnification: 20000x
Resolution: 2560 $\times$ 1920 pixel

The crystal grains were analyzed by the same method as that for the average inhibitor particle size except for that a gray scale OHP sheet in which crystal grains in the obtained SEM observation diagram were traced was captured into the image analysis software and that the binarizing was performed at a threshold of 150, and then the average crystal grain size was obtained through the average values of the areas (S) and the equivalent circle diameters (D) of the obtained crystal grains. The number of crystal grains used in the calculation was 100 $\pm$ 50.

(Tensile strength)

The tensile strength was measured in accordance with JIS R 1656 with a strength tester (instrument name: AG-XPlus produced by Shimadzu Corporation) and a tensile test jig. Measurement was conducted twice and the average value was obtained.

The CMC sample was processed into a width of 10 $\pm$ 1 mm, a length of 110 $\pm$ 10 mm and a thickness of 2 $\pm$ 1 mm and aluminum tabs were attached to both ends to prepare a tensile test specimen. The width and thickness of the tensile test specimen were measured with a micrometer and the length of the test specimen was measured with a caliper. The load speed was 0.5 mm/min.

[Preparation of raw material slurry]

(Synthesis example 1)

49 g of an $\alpha$-alumina powder (average particle size: 0.15 $\mu$m), 0.15 g of a spherical silica powder (average particle size: 0.24 $\mu$m), 1.0 g of a 3 mol% yttrium-containing zirconia powder (average particle size: 0.04 $\mu$m; 3YSZ powder) and 50 g of ethanol were mixed with alumina balls 10 mm in diameter serving as grinding media in a ball mill for 24 hours to obtain a raw material slurry having a solid component concentration of 50 mass% and this raw material slurry was used as the raw material slurry of this synthesis example. The solvent was removed from the raw material slurry of this synthesis example at 60°C in an air atmosphere to prepare a powder of this synthesis example.

(Synthesis example 2)

A raw material slurry and a powder of this synthesis example were obtained as in Synthesis example 1 except that 49 g of an $\alpha$-alumina powder and 0.25 g of a spherical silica powder were used.

(Synthesis example 3)

A raw material slurry and a powder of this synthesis example were obtained as in Synthesis example 1 except that 49 g of an $\alpha$-alumina powder and 0.35 g of a spherical silica powder were used.

(Synthesis example 4)

A raw material slurry and a powder of this synthesis example were obtained as in Synthesis example 1 except that 49 g of an $\alpha$-alumina powder and 0.50 g of a spherical silica powder were used.

(Synthesis example 5)

A raw material slurry and a powder of this synthesis example were obtained as in Synthesis example 1 except that 49 g of an $\alpha$-alumina powder, 0.50 g of a spherical silica powder and 0.25 g of a 3YSZ powder were used.

(Synthesis example 6)

A raw material slurry and a powder of this synthesis example were obtained as in Synthesis example 1 except that 47 g of an $\alpha$-alumina powder, 0.50 g of a spherical silica powder and 2.5 of a 3YSZ powder were used.

(Synthesis example 7)

A raw material slurry and a powder of this synthesis example were obtained as in Synthesis example 1 except that 49 g of an $\alpha$-alumina powder, 1.0 g of a spherical silica powder were used and 0.25 g of a $Yb_2O_3$ powder (average particle size: 6.6 $\mu$m) was used instead of the 3YSZ powder.

(Synthesis example 8)

A raw material slurry and a powder of this synthesis example were obtained as in Synthesis example 1 except that 49 g of an $\alpha$-alumina powder and 0.50 g of a spherical silica powder were used and 0.25 g of a $Yb_2O_3$ powder (average particle size: 6.6 $\mu$m) was used instead of the 3YSZ powder.

(Synthesis example 9)

A raw material slurry and a powder of this synthesis example were obtained as in Synthesis example 1 except that 49 g of an $\alpha$-alumina powder and 0.50 g of a spherical silica powder were used and 1.0 g of a $HfO_2$ powder (average particle size: 3.0 $\mu$m) was used instead of the 3YSZ powder.

(Comparative synthesis example 1)

A raw material slurry and a powder of this synthesis example were obtained as in Synthesis example 1 except that 50 g of an $\alpha$-alumina powder, a spherical silica powder and 3YSZ were not used.

(Comparative synthesis example 2)

A raw material slurry and a powder of this synthesis example were obtained as in Synthesis example 1 except that 49 g of an $\alpha$-alumina powder and 1.5 g of a spherical silica powder were used but 3YSZ was not used.

(Comparative synthesis example 3)

A raw material slurry and a powder of this synthesis example were obtained as in Synthesis example 1 except that 49 g of an $\alpha$-alumina powder and 0.50 g of a spherical silica powder were used but 3YSZ was not used.

(Comparative synthesis example 4)

A raw material slurry and a powder of this synthesis example were obtained as in Synthesis example 1 except that 48 g of an $\alpha$-alumina powder and a spherical silica powder were not used and that 2.5 g of 3YSZ was used.

Measurement examples

1.8 g of each of the powders obtained in Synthesis examples 2, 4, and 6 to 8 and Comparative synthesis examples 1 to 3 was packed in a forming mold having a diameter of 21.9 mm and uniaxially pressed at a forming pressure of 50 MPa to obtain a disk-shaped green body. The same operation was repeated so that two green bodies were prepared for each of the synthesis examples. The obtained green bodies were sintered in an air atmosphere at 1100°C for 2 hours to obtain sintered bodies. The obtained sintered bodies were heat-treated in an air atmosphere at 1200°C for 100 hours and then heat-treated in an air atmosphere at 1300°C for 100 hours. After these heat treatments, the shapes of the sintered bodies were measured and the shrinkage rates were determined by the following equation.

$$\text{Shrinkage rate (\%)} = \{1 - (d2 \div d1)\} \times 100$$

where d1 represents a diameter (21.9 mm) of the forming mold. Furthermore, d2 represents the diameter (mm) of the sintered body after the heat treatments, and this diameter was determined by measuring the diameter of each of the green bodies (two green bodies) of each synthesis example at three points and taking an average of a total of six points.

The results are indicated in the table below.

[Table 1]

|  | Inhibitor ratio | Silica ratio | Shrinkage rate [%] |
|---|---|---|---|
| Synthesis example 2 | 2.5 | 0.20 | 6.6 |
| Synthesis example 4 | 3.0 | 0.33 | 4.5 |
| Synthesis example 6 | 6.0 | 0.17 | 8.1 |
| Synthesis example 7 | 3.0 | 0.67 | 4.0 |
| Synthesis example 8 | 1.5 | 0.67 | 4.7 |
| Synthesis example 9 | 3.0 | 0.33 | 3.9 |
| Comparative synthesis example 1 | 0 | 0 | 16.8 |
| Comparative synthesis example 2 | 3.0 | 1.0 | 4.5 |
| Comparative synthesis example 3 | 1.0 | 1.0 | 4.5 |
| Comparative synthesis example 4 | 5.0 | 0 | 13.3 |

In all synthesis examples, it could be confirmed that the shrinkage rate was smaller than Comparative synthesis example 1 free of inhibitors and thus the sintering inhibiting effect of silica and zirconia, hafnia or ytterbium oxide could be confirmed. Furthermore, compared to Comparative synthesis example 1 free of inhibitors, Comparative synthesis examples 2 to 4 containing silica or zirconia exhibited smaller shrinkage rates and underwent less sintering. As a result, it could be confirmed that silica and zirconia alone can function as a inhibitor. In contrast, the shrinkage rate of Synthesis example 6 containing silica and zirconia exhibited larger shrinkage rates than Comparative synthesis example 3 containing only silica. As a result, it could be confirmed that when two inhibitors (silica and zirconia) were contained, the sintering inhibiting effect was smaller than Comparative synthesis example 3 containing only silica. Furthermore, although Comparative synthesis example 2 contained the inhibitor (silica) in an amount three times larger than that of Comparative synthesis example 3, there was no difference in the shrinkage rate and the change in the sintering inhibiting effect caused by the amount of silica could not be confirmed.

[Preparation of CMC]

(Example 1)

A raw material slurry having the same composition as Synthesis example 1 was obtained. That is, to 92 g of an $\alpha$-alumina powder (average particle size: 0.15 $\mu$m), 0.28 g of a spherical silica powder (average particle size: 0.24 $\mu$m) and 1.9 g of a 3YSZ powder (average particle size: 0.04 $\mu$m) serving as inhibitor sources were added to obtain a mixed powder. To the mixed powder, 31 g of dilute nitric acid (pH = 2) was mixed to obtain a raw material slurry. The mixing was performed by a ball mill process for 24 hours using alumina balls having a diameter of 10 mm as the grinding media. The obtained raw material slurry had a solid component concentration of 75 mass%.

A commercially available alumina and mullite continuous fiber cloth (product name: Nextel-720 produced by 3M, a continuous ceramic fiber having an $\alpha$-alumina structure and a mullite structure as the crystal structure and having an $Al_2O_3$ content of 85 mass% and a $SiO_2$ content of 15 mass%) was processed (desized) at 800°C in an air atmosphere. The continuous fibers after the desizing process were impregnated with the raw material slurry and then heat-treated at 120 $\pm$ 10°C for 6 $\pm$ 2 hours twice to be solidified, thereby obtaining a green body having a width of 110 mm, a length of 130 mm and a thickness of 2 mm.

The green body was heat-treated in an air atmosphere at 900°C to obtain a calcined body. The calcined body was heat-treated in an air atmosphere at 1100°C and then cooled to room temperature. Then the temperature was elevated again to perform a heat treatment in an air atmosphere at 1200°C to obtain a CMC of this example.

The CMC of this example had a CMC density of 2.72 g/cm$^3$.

(Example 2)

A raw material slurry having the same composition as Synthesis example 2 was obtained. That is, a CMC of this example was obtained as in Example 1 except that 91 g of an $\alpha$-alumina powder and 0.47 g of a spherical silica powder were used.

The CMC of this example had an average inhibitor particle size of 0.41 $\mu$m, a centroid-centroid distance of 0.94 $\mu$m and a CMC density of 2.69 g/cm$^3$.

(Example 3)

A raw material slurry having the same composition as Synthesis example 3 was obtained. That is, a CMC of this example was obtained as in Example 1 except that 91 g of an $\alpha$-alumina powder and 0.66 g of a spherical silica powder were used.

The CMC of this example had an average inhibitor particle size of 0.45 $\mu$m, a centroid-centroid distance of 1.0 $\mu$m and a CMC density of 2.66 g/cm$^3$.

(Example 4)

A raw material slurry having the same composition as Synthesis example 4 was obtained. That is, a CMC of this example was obtained as in Example 1 except that 91 g of an $\alpha$-alumina powder and 0.94 g of a spherical silica powder were used.

The CMC of this example was a CMC that contained alumina as the matrix, alumina and mullite continuous fibers as the continuous ceramic fibers and silica and zirconia as the inhibitors, and had an average crystal grain size of 0.17 $\mu$m, an average inhibitor particle size of 0.30 $\mu$m, a centroid-centroid distance of 1.9 $\mu$m and a CMC density of 2.62 g/cm$^3$.

(Example 5)

A raw material slurry having the same composition as Synthesis example 5 was obtained. That is, a CMC of this example was obtained as in Example 1 except that 0.94 g of a spherical silica powder was used and 0.47 g of a 3YSZ powder was used.

The CMC of this example had an average inhibitor particle size of 0.27 $\mu$m, a centroid-centroid distance of 0.82 $\mu$m and a CMC density of 2.59 g/cm$^3$.

(Example 6)

A raw material slurry having the same composition as Synthesis example 6 was obtained. That is, a CMC of this example was obtained as in Example 1 except that 88 g of an $\alpha$-alumina powder and 0.94 g of a spherical silica powder were used and that 4.7 g of a 3YSZ powder was used.

The CMC of this example had an average inhibitor particle size of 0.33 $\mu$m, a centroid-centroid distance of 0.88 $\mu$m and a CMC density of 2.64 g/cm$^3$.

(Example 7)

A raw material slurry having the same composition as Synthesis example 7 was obtained. That is, a CMC of this example was obtained as in Example 1 except that 91 g of an $\alpha$-alumina powder and 1.9 g of a spherical silica powder were used and 0.47 g of a $Yb_2O_3$ powder (average particle size: 6.6 $\mu$m) was used instead of the 3YSZ powder.

(Example 8)

A raw material slurry having the same composition as Synthesis example 8 was obtained. That is, a CMC of this example was obtained as in Example 1 except that 0.94 g of a spherical silica powder was used and 0.47 g of a $Yb_2O_3$ powder (average particle size: 6.6 $\mu$m) was used instead of the 3YSZ powder.

The CMC of this example had an average inhibitor particle size of 0.47 $\mu$m, a centroid-centroid distance of 4.8 $\mu$m and a CMC density of 2.58 g/cm$^3$.

(Example 9)

A raw material slurry having the same composition as Synthesis example 9 was obtained. That is, a CMC of this example was obtained as in Example 1 except that 91 g of an $\alpha$-alumina powder and 0.94 g of a spherical silica powder were used and 1.9 g of a $HfO_2$ powder (average particle size: 3.0 $\mu$m) was used instead of the 3YSZ powder.
The CMC of this example had an average inhibitor particle size of 0.26 $\mu$m, a centroid-centroid distance of 1.7 $\mu$m and a CMC density of 2.62 g/cm$^3$.

(Comparative example 1)

A raw material slurry having the same composition as Comparative synthesis example 1 was obtained. That is, a raw material slurry and a CMC of this comparative example were obtained as in Example 1 except that 2.8 g of a silica powder was used and the 3YSZ powder was not used.
The raw material slurry had a solid component concentration of 75 mass%. The CMC of this comparative example was a CMC that contained alumina as the matrix, alumina and mullite continuous fibers as the continuous ceramic fibers and silica as the inhibitor, and had a fiber volume fraction of 42 vol% and a density of 2.52 g/cm$^3$.
The CMC of this comparative example had a CMC density of 2.76 g/cm$^3$.

(Comparative example 2)

A raw material slurry having the same composition as Comparative synthesis example 2 was obtained. That is, a CMC of this comparative example was obtained as in Example 1 except that 49 g of an $\alpha$-alumina powder and 1.5 g of a spherical silica powder were used and that the 3YSZ powder was not used.
The CMC of this example had an average crystal grain size of 0.18 $\mu$m, an average inhibitor particle size of 0.38 $\mu$m, a centroid-centroid distance of 2.3 $\mu$m and a CMC density of 2.52 g/cm$^3$.

(Comparative example 3)

A raw material slurry having the same composition as Comparative synthesis example 3 was obtained. That is, a CMC of this comparative example was obtained as in Example 1 except that 49 g of an $\alpha$-alumina powder and 0.50 g of a spherical silica powder were used and that the 3YSZ powder was not used.
The CMC of this example had a CMC density of 2.61 g/cm$^3$.
The evaluation results of the CMCs of Examples and Comparative examples are indicated in the table below.

[Table 2]

|  | Matrix | | Sintering inhibitor | | | | Continuous ceramic fibers | |
| --- | --- | --- | --- | --- | --- | --- | --- | --- |
|  | Type | Content [wt%] | Type | Content [wt%] | Type | Content [wt%] | Type | Content [wt%] |
| Example 1 | $Al_2O_3$ | 40.47 | $SiO_2$ | 0.12 | 3YSZ | 0.83 | Alumina and mullite | 58.58 |
| Example 2 | $Al_2O_3$ | 38.73 | $SiO_2$ | 0.20 | 3YSZ | 0.80 | Alumina and mullite | 60.27 |
| Example 3 | $Al_2O_3$ | 38.77 | $SiO_2$ | 0.28 | 3YSZ | 0.80 | Alumina and mullite | 60.15 |
| Example 4 | $Al_2O_3$ | 39.86 | $SiO_2$ | 0.41 | 3YSZ | 0.82 | Alumina and mullite | 58.91 |
| Example 5 | $Al_2O_3$ | 41.10 | $SiO_2$ | 0.42 | 3YSZ | 0.21 | Alumina and mullite | 58.27 |
| Example 6 | $Al_2O_3$ | 37.46 (37.464) * | $SiO_2$ | 0.40 (0.399) * | 3YSZ | 1.99 (1.993)* | Alumina and mullite | 60.14 (60.144) * |

(continued)

| | Matrix | | Sintering inhibitor | | | | Continuous ceramic fibers | |
|---|---|---|---|---|---|---|---|---|
| | Type | Content [wt%] | Type | Content [wt%] | Type | Content [wt%] | Type | Content [wt%] |
| Example 7 | $Al_2O_3$ | 41.76 | $SiO_2$ | 0.86 | $Yb_2O_3$ | 0.21 | Alumina and mullite | 57.17 |
| Example 8 | $Al_2O_3$ | 41.09 | $SiO_2$ | 0.42 | $Yb_2O_3$ | 0.21 | Alumina and mullite | 58.28 |
| Example 9 | $Al_2O_3$ | 40.81 | $SiO_2$ | 0.42 | $HfO_2$ | 0.84 | Alumina and mullite | 57.93 |
| Comparative example 1 | $Al_2O_3$ | 44.44 | | | | | Alumina and mullite | 55.56 |
| Comparative example 2 | $Al_2O_3$ | 40.26 (40.255)* | $SiO_2$ | 1.25 (1.245)* | | | Alumina and mullite | 58.50 (58.500)* |
| | | | | | | | Asterisks indicate values before rounding off | |

Measurement examples (measurement of strength retaining rate)

The CMCs of Examples and Comparative examples were each heat-treated in an air atmosphere at 1200°C for 1000 hours (heat exposure process) and the tensile strength before and after the heat treatment and the strength retaining rate were determined. The results are indicated in the table below.

[Table 3]

| | Tensile strength [MPa] | | Strength retaining rate [%] |
|---|---|---|---|
| | Before heat exposure process | After heat exposure process | |
| Example 1 | 150 | 126 | 84 |
| Example 2 | 160 | 143 | 89 |
| Example 3 | 153 | 133 | 87 |
| Example 4 | 167 | 147 | 88 |
| Example 5 | 154 | 154 | 100 |
| Example 6 | 170 | 134 | 79 |
| Example 8 | 170 | 168 | 98 |
| Example 9 | 140 | 129 | 92 |
| Comparative example 2 | 175 | 131 | 75 |

All of the CMCs of Examples had a strength retaining rate exceeding 75% and higher than the strength retaining rate of the CMC of Comparative example 2. In Examples 2 and 6 containing 3YSZ in addition to silica, the shrinkage rate is larger than Comparative example 2 containing only silica, indicating a smaller shrinkage inhibiting effect by the inhibitor. Meanwhile, it is considered that, since the strength retaining rate was high, the strength retaining rate improved due to the presence of two inhibitors and by an effect different from the sintering inhibiting effect.

In Example 4, silica ($SiO_2$) and 3YSZ were contained as the inhibitors. Due to the presence of two inhibitors, Example 4 exhibited a strength retaining rate of 88% and it could be confirmed that the decrease in tensile strength of the CMC caused by heat exposure process was reduced. Meanwhile, in Comparative example 2, the strength retaining rate was 75%, and the decrease in tensile strength of the CMC caused by heat exposure process was prominent.

The entire contents of the description, claims, drawings, and abstract of Japanese Patent Application 2021-207536 filed December 21, 2021 are hereby incorporated by reference herein as the disclosure of the description of the present disclosure.

REFERENCE SYMBOLS

| | |
|---|---|
| 110 | mapping image |
| 120 | binary image |
| 12a | sintering inhibitor |
| 12b | noise |
| 12c | ceramic matrix |
| 130 | processed image |
| 21a to 21e | white region (inhibitor) |
| 31 | continuous ceramic fiber |
| 32 | ceramic matrix |
| 33 | sintering inhibitor |

**Claims**

1. A ceramic matrix composite comprising a ceramic matrix, continuous ceramic fibers and at least two sintering inhibitors.

2. The ceramic matrix composite according to claim 1, wherein the sintering inhibitors are at least two selected from the group consisting of silica, germania, zirconia, yttria, titania, hafnia, magnesia, scandia, lanthanum oxide, cerium oxide, praseodymium oxide, neodymium oxide, samarium oxide, europium oxide, gadolinium oxide, terbium oxide, erbium oxide, ytterbium oxide, lutetium oxide and mullite.

3. The ceramic matrix composite according to claim 1 or 2, wherein at least silica is contained as the sintering inhibitors.

4. The ceramic matrix composite according to any one of claims 1 to 3, wherein a mass ratio of the sintering inhibitors to the ceramic matrix is more than 0 and 6.0 or less.

5. The ceramic matrix composite according to any one of claims 1 to 4, wherein an average inhibitor particle size is 0.20 $\mu$m or more and 0.90 $\mu$m or less.

6. The ceramic matrix composite according to any one of claims 1 to 5, wherein an average centroid-centroid distance is 0.6 $\mu$m or more and 5.0 $\mu$m or less.

7. The ceramic matrix composite according to any one of claims 1 to 6, wherein the ceramic matrix is at least one of alumina and mullite.

8. The ceramic matrix composite according to any one of claims 1 to 7, wherein the continuous ceramic fibers contain an $\alpha$-alumina structure in a crystal structure and have an $Al_2O_3$ content of 60 mass% or more and 100 mass% or less.

9. A method for manufacturing the ceramic matrix composite according to any one of claims 1 to 8, the method comprising: a step of obtaining a mixture by mixing continuous ceramic fibers and a slurry containing a ceramic matrix source and at least two sintering inhibitor sources, a step of obtaining a green body by solidifying the mixture and a step of firing the green body.

10. The manufacturing method according to claim 9, wherein the sintering inhibitor sources are compounds that contain at least one selected from the group consisting of silicon, aluminum, germanium, zirconium, yttrium, titanium, hafnium, magnesium, scandium and lanthanoid elements.

11. A member comprising the ceramic matrix composite according to any one of claims 1 to 8.

# FIG. 1

# FIG. 2

# FIG. 3

## INTERNATIONAL SEARCH REPORT

| International application No. |
|---|
| **PCT/JP2022/046653** |

**A.    CLASSIFICATION OF SUBJECT MATTER**

*C04B 35/80*(2006.01)i
FI:    C04B35/80

According to International Patent Classification (IPC) or to both national classification and IPC

**B.    FIELDS SEARCHED**

Minimum documentation searched (classification system followed by classification symbols)

C04B35/80

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | WO 2020/203484 A1 (TOSOH CORPORATION) 08 October 2020 (2020-10-08) paragraphs [0065]-[0067] | 1-2, 4-11 |
| A | | 3 |
| Y | JP 62-41776 A (NGK SPARK PLUG CO LTD) 23 February 1987 (1987-02-23) p. 3, lower left column, line 6 to lower right column, line 7, table 1 | 1-2, 4-11 |
| A | | 3 |
| Y | JP 60-11265 A (HITACHI METALS LTD) 21 January 1985 (1985-01-21) p. 2, upper left column, line 10 to lower right column, line 13 | 1-2, 4-11 |
| A | | 3 |
| A | JP 2002-173376 A (MITSUI KOZAN MATERIAL KK) 21 June 2002 (2002-06-21) entire text, all drawings | 1-11 |
| A | JP 4-2673 A (MATSUSHITA ELECTRIC IND CO LTD) 07 January 1992 (1992-01-07) entire text, all drawings | 1-11 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 February 2023** | **14 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| | International application No. |
|---|---|
| | **PCT/JP2022/046653** |

C.    DOCUMENTS CONSIDERED TO BE RELEVANT

| Category* | Citation of document, with indication, where appropriate, of the relevant passages | Relevant to claim No. |
|---|---|---|
| P, A | WO 2022/138664 A1 (TOSOH CORPORATION) 30 June 2022 (2022-06-30)<br>entire text, all drawings | 1-11 |

Form PCT/ISA/210 (second sheet) (January 2015)

**INTERNATIONAL SEARCH REPORT**
Information on patent family members

International application No.

**PCT/JP2022/046653**

| Patent document cited in search report | | | Publication date (day/month/year) | Patent family member(s) | | | Publication date (day/month/year) |
|---|---|---|---|---|---|---|---|
| WO | 2020/203484 | A1 | 08 October 2020 | US 2022/0185742 A1 paragraphs [0106]-[0109] EP 3950640 A1 CN 113631532 A | | | |
| JP | 62-41776 | A | 23 February 1987 | EP 208910 A1 p. 10, line 7 to p. 11, line 2, table 1 | | | |
| JP | 60-11265 | A | 21 January 1985 | (Family: none) | | | |
| JP | 2002-173376 | A | 21 June 2002 | US 2002/0037802 A1 whole document, whole drawimg EP 1193236 A2 | | | |
| JP | 4-2673 | A | 07 January 1992 | (Family: none) | | | |
| WO | 2022/138664 | A1 | 30 June 2022 | JP 2022-103110 A | | | |

Form PCT/ISA/210 (patent family annex) (January 2015)

**REFERENCES CITED IN THE DESCRIPTION**

**Patent documents cited in the description**

- JP 2021207536 A

**Non-patent literature cited in the description**

- *J. AM. CERAM. SOC.,* 1998, vol. 81 (8), 2077-86
- *J. EURO. CERAM. SOC.,* 2004, vol. 24, 565-578